# EUROPEAN PATENT APPLICATION

(11) **EP 4 140 794 A1**
(43) Date of publication of application: **01.03.2023**
(21) Application number: 21807687.5
(22) Date of filing: 06.04.2021
(51) Int. Cl.: B60K 17/34, B60L 15/20

(54) **POWER DRIVING SYSTEM AND VEHICLE**

(30) Priority: 21.05.2020 CN 202010438041
(71) Applicant: Huawei Digital Power Technologies Co., Ltd., Shenzhen, Guangdong 518043 (CN)
(72) Inventor: WU, Chaoqiang, Shenzhen, Guangdong 518129 (CN); WANG, Shaohua, Shenzhen, Guangdong 518129 (CN); CHEN, Jinhua, Shenzhen, Guangdong 518129 (CN); MA, Wenwu, Shenzhen, Guangdong 518129 (CN)
(74) Representative: Huawei European IPR
(86) International application number: PCT/CN2021/085638
(87) International publication number: WO 2021/232976

(57) **Abstract**

A power drive system, a control method, a device, a vehicle, and a storage medium are disclosed, which relate to the field of automotive technologies. The power drive system is applied to an electric vehicle and includes: a front-wheel-drive motor and a rear-wheel-drive motor, at least one of which is an electrical excitation motor, where the front-wheel-drive motor is configured to provide power for front wheels to drive the vehicle, and the rear-wheel-drive motor is configured to provide power for rear wheels to drive the vehicle.

## Description

This application claims priority to Chinese Patent Application No. 202010438041.4, filed with the China National Intellectual Property Administration on May 21, 2020, and entitled "POWER DRIVE SYSTEM AND VEHICLE", which is incorporated herein by reference in its entirety.

### TECHNICAL FIELD

This application relates to the field of automotive technologies, and in particular, to a power drive system, a control method, a device, a vehicle, and a storage medium.

### BACKGROUND

As new energy vehicles featuring low petroleum consumption, low pollution, and low noise, electric vehicles are considered as a main development direction for future road transportation means to cope with energy crisis and environmental deterioration. At present, an existing electric vehicle may have a four-wheel-drive system. Generally, a four-wheel-drive electric vehicle has two power plants: a primary drive power plant and a secondary drive power plant. The primary drive power plant is mainly composed of a permanent magnet synchronous motor, and the secondary drive power plant is mainly composed of an asynchronous motor or a synchronous motor. However, the synchronous motor is of high costs, is subject to large drag loss, causes high counter-electromotive force, and usually has a risk of over temperature. Therefore, the synchronous motor needs to be isolated using a clutch. The asynchronous motor has a large volume, and is subject to a significant decrease in power and torque when the vehicle is at a high speed, which causes low overall efficiency and cannot effectively improve endurance. Therefore, the configuration of the power plant of the existing electric vehicle is restricted by the characteristics of the foregoing motors, which affects indicators such as safety and power of the electric vehicle.

### SUMMARY

Embodiments of this application provide a power drive system, a control method, a device, a vehicle, and a storage medium, to provide a power drive system using an electrical excitation motor. The electrical excitation motor is used for front-wheel drive and/or rear-wheel drive to drive the vehicle, thereby balancing power and economy of the vehicle.

According to a first aspect, an embodiment of this application provides a power drive system, applied to a vehicle. The power drive system includes: a front-wheel-drive motor and a rear-wheel-drive motor, at least one of which is an electrical excitation motor, where the front-wheel-drive motor is configured to provide power for front wheels to drive the vehicle, and the rear-wheel-drive motor is configured to provide power for rear wheels to drive the vehicle.

Optionally, the front-wheel-drive motor is an electrical excitation motor, and the rear-wheel-drive motor is a permanent magnet synchronous motor or an asynchronous motor; or the front-wheel-drive motor is a permanent magnet synchronous motor or an asynchronous motor, and the rear-wheel-drive motor is an electrical excitation motor; or both the front-wheel-drive motor and the rear-wheel-drive motor are electrical excitation motors.

Optionally, the electrical excitation motor is any one of a wireless feed excitation motor, a brush excitation motor, and a hybrid excitation motor.

According to a second aspect, an embodiment of this application further provides a control method for a power drive system, applied to the foregoing power drive system. The control method for a power drive system includes: obtaining driving cycle information of a vehicle in real time; and dynamically adjusting a power distribution ratio based on the driving cycle information of the vehicle, where the power distribution ratio is a ratio of power output to a front-wheel-drive motor to power output to a rear-wheel-drive motor.

Optionally, the obtaining driving cycle information of a vehicle in real time further includes: obtaining power required torque Q of the vehicle, a preset front-wheel-drive torque high-efficiency interval [Fmin1, Fmax1], and a preset rear-wheel-drive torque high-efficiency interval [Fmin2, Fmax2]; and
the dynamically adjusting a power distribution ratio based on the driving cycle information of the vehicle includes: adjusting the power distribution ratio based on Q, [Fmin1, Fmax1], and [Fmin2, Fmax2], where
if Fmin1 + Fmin2 ≤ Q ≤ Fmax1 + Fmax2, the power distribution ratio is adjusted such that Fmin1 ≤ F1 ≤ Fmax1, Fmin2 ≤ F2 ≤ Fmax2, and F1 + F2 = Q, where F1 is torque of the front-wheel-drive motor, and F2 is torque of the rear-wheel-drive motor.

Optionally, in the power drive system, the rear-wheel-drive motor is an electrical excitation motor, and the process of adjusting the power distribution ratio based on Q, [Fmin1, Fmax1], and [Fmin2, Fmax2] further includes:
if Q < Fmin1 + Fmin2, and Q <_ Fmax1, adjusting the power distribution ratio such that Fmin1 ≤ F1 ≤ Fmax1, F2 = 0, and F1 + F2 = Q.

Optionally, in the power drive system, the front-wheel-drive motor is an electrical excitation motor, and the process of adjusting the power distribution ratio based on Q, [Fmin1, Fmax1], and [Fmin2, Fmax2] further includes:
if Q < Fmin1 + Fmin2, and Q <_ Fmax2, adjusting the power distribution ratio such that F1 = 0, Fmin2 ≤ F2 ≤ Fmax2, and F1 + F2 = Q.

Optionally, the obtaining driving cycle information of a vehicle in real time includes: obtaining a temperature of the front-wheel-drive motor and a temperature of the rear-wheel-drive motor; and the dynamically adjusting a power distribution ratio based on the driving cycle information of the vehicle includes: when the temperature of the front-wheel-drive motor reaches a first threshold or higher, decreasing the power output to the front-wheel-drive motor, and increasing the power output to the rear-wheel-drive motor; and when the temperature of the rear-wheel-drive motor reaches a second threshold or higher, increasing the power output to the front-wheel-drive motor, and decreasing the power output to the rear-wheel-drive motor.

Optionally, the obtaining driving cycle information of a vehicle in real time includes: obtaining a traveling state of the vehicle; and the dynamically adjusting a power distribution ratio based on the driving cycle information of the vehicle includes: when the traveling state of the vehicle is going uphill, decreasing the power output to the front-wheel-drive motor, and increasing the power output to the rear-wheel-drive motor; and when the traveling state of the vehicle is turning beyond a preset angle, increasing the power output to the front-wheel-drive motor, and decreasing the power output to the rear-wheel-drive motor.

According to a third aspect, an embodiment of this application further provides a control device for a power drive system, including: a processor and a memory, where the memory is configured to store at least one instruction, and when the instruction is loaded and executed by the processor, the control method for a power drive system is implemented.

According to a fourth aspect, an embodiment of this application further provides a vehicle, including the foregoing power drive system and the foregoing control device for a power drive system.

According to a fifth aspect, an embodiment of this application further provides a computer-readable storage medium. The computer-readable storage medium stores a computer program, and when the computer program runs on a computer, the computer is enabled to perform the control method for a power drive system.

According to the power drive system, the control method, the device, the vehicle, and the storage medium provided in the embodiments of this application, at least one of the front-wheel-drive motor and the rear-wheel-drive motor is an electrical excitation motor. Because torque of the electrical excitation motor has a relatively large high-efficiency interval, power distributed to the front-wheel-drive motor and the rear-wheel-drive motor can be dynamically adjusted based on the driving cycle information of the vehicle. When power of one of the front-wheel-drive motor and the rear-wheel-drive motor is adjusted to 0, the electrical excitation motor is in a non-operating state. The electrical excitation motor can be controlled to be in a non-operating state directly by an excitation component not transmitting energy, no clutch is required, which is low in costs. Moreover, in this case, no counter-electromotive force or a small amount of counter-electromotive force is generated in a stator. Therefore, low loss is caused, reducing costs while improving efficiency. In other words, power and economy of the vehicle are balanced.

### BRIEF DESCRIPTION OF DRAWINGS

FIG. 1 is a block diagram of a structure of a power drive system for a vehicle according to an embodiment of this application;
FIG. 2 is a schematic diagram of a state in which a rotor of an electrical excitation motor rotates along according to an embodiment of this application;
FIG. 3 is a block diagram of a structure of another power drive system for a vehicle according to an embodiment of this application;
FIG. 4 is a block diagram of a structure of another power drive system for a vehicle according to an embodiment of this application;
FIG. 5 is a block diagram of a structure of another power drive system for a vehicle according to an embodiment of this application;
FIG. 6 is a schematic flowchart of a control method for a power drive system according to an embodiment of this application;
FIG. 7 is a schematic diagram of an efficiency interval of a front-wheel-drive motor according to an embodiment of this application;
FIG. 8 is a schematic diagram of an efficiency interval of a rear-wheel-drive motor according to an embodiment of this application;
FIG. 9 is a schematic flowchart of another control method for a power drive system according to an embodiment of this application;
FIG. 10 is a schematic flowchart of another control method for a power drive system according to an embodiment of this application; and
FIG. 11 is a block diagram of a structure of another power drive system for a vehicle according to an embodiment of this application.

### DETAILED DESCRIPTION OF EMBODIMENTS

The following describes the technical solutions in embodiments of this application with reference to the accompanying drawings in embodiments of this application. In descriptions of embodiments of this application, unless otherwise specified, "/" means "or". For example, A/B may indicate A or B. In this specification, "and/or" merely describes an association relationship between associated objects and indicates that three relationships may exist. For example, A and/or B may indicate the following three cases: Only A exists, both A and B exist, and only B exists.

The terms "first" and "second" hereinafter are merely intended for a purpose of descriptions, and shall not be understood as an indication or implication of relative importance or implicit indication of a quantity of indicated technical features. Therefore, a feature defined by "first" or "second" may explicitly or implicitly include one or more features. In the descriptions of embodiments of this application, unless otherwise specified, "a plurality of" means two or more.

At present, a four-wheel-drive electric vehicle has two power plants: a primary drive power plant and a secondary drive power plant. The primary drive power plant and the secondary drive power plant are arranged on one side of front wheels and rear wheels, respectively. In some cases, the secondary drive power plant is in a non-operating state, and a motor in the secondary drive power plant may rotate along or may be in a cut-off state.

In the current four-wheel-drive electric vehicle, the primary drive power plant is mainly composed of a permanent magnet synchronous motor, and the secondary drive power plant is mainly composed of an asynchronous motor or a permanent magnet synchronous motor. For the secondary drive power plant, the permanent magnet synchronous motor is of high costs, is subject to large drag loss, causes high counter-electromotive force, and has a risk of over temperature. Therefore, the motor in the secondary drive power plant needs to be cut off using a clutch, to prevent a magnetic field from being generated when the motor rotates along, and thereby prevent counter-electromotive force, which affects a motor controller and causes loss. The asynchronous motor has a large volume, and is subject to a significant decrease in power and torque when the vehicle travels at a high speed, which causes low overall efficiency and cannot effectively improve endurance capability. Therefore, regardless of which type of motor is used for the secondary drive power plant, the foregoing problem is present, that is, power and economy of the four-wheel-drive electric vehicle cannot be balanced.

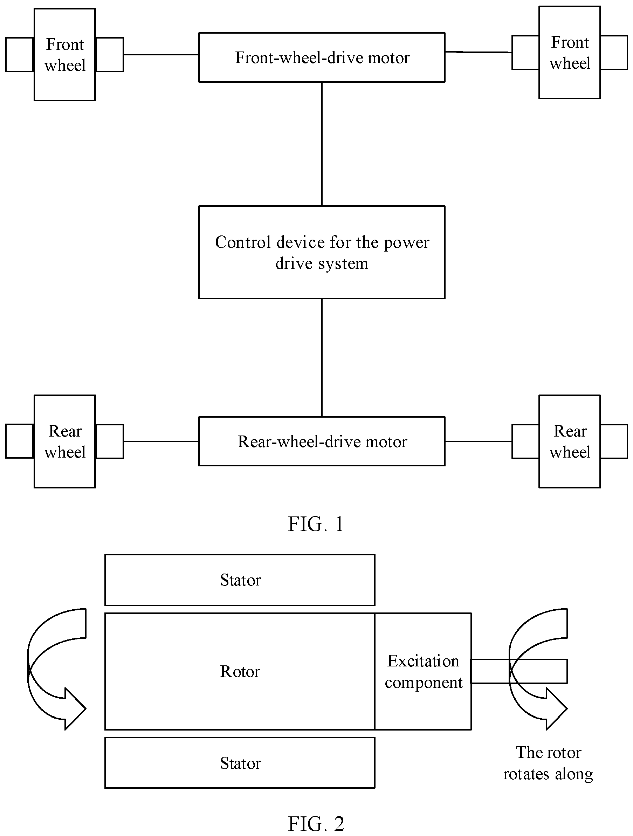

FIG. 1 is a block diagram of a structure of a power drive system for a vehicle according to an embodiment of this application. An embodiment of this application provides a power drive system, applied to a vehicle. The power drive system includes: a front-wheel-drive motor and a rear-wheel-drive motor, at least one of which is an electrical excitation motor, where the front-wheel-drive motor is configured to provide power for front wheels to drive the vehicle, and the rear-wheel-drive motor is configured to provide power for rear wheels to drive the vehicle. FIG. 1 further illustrates a control device for the power drive system, which is configured to perform overall control of the power drive system, that is, control the front-wheel-drive motor and the rear-wheel-drive motor.

Specifically, FIG. 2 is a schematic diagram of a state in which a rotor of an electrical excitation motor rotates along according to an embodiment of this application. The electrical excitation motor includes a stator and a rotor. FIG. 2 further illustrates an excitation component for driving the rotor. In this embodiment of this application, at least one of the front-wheel-drive motor and the rear-wheel-drive motor is an electrical excitation motor. When the electrical excitation motor is used as a secondary drive and is in a non-operating state, a secondary drive part does not need to be disconnected from a main driveshaft of the vehicle. Because the rotor of the electrical excitation motor does not contain magnetic steel or contains only a small amount of magnetic steel, an exciting current on the rotor can be cut off (the exciting current becomes 0), such that the rotor rotates along, thereby minimizing loss of the secondary drive. Because the electrical excitation motor can be controlled to be in a non-operating state directly using the exciting current, no clutch is required, which is low in costs. In addition, when the secondary drive rotates along, the excitation component does not transmit energy, no magnetic field or only a small amount of magnetic flux exists in the rotor, and no counter-electromotive force or a small amount of counter-electromotive force is generated in the stator. Therefore, low loss is caused. Moreover, due to relatively high efficiency, the electrical excitation motor can be used as a motor in a four-wheel-drive automobile to reduce costs while improving efficiency. In other words, power and economy of the vehicle are balanced.

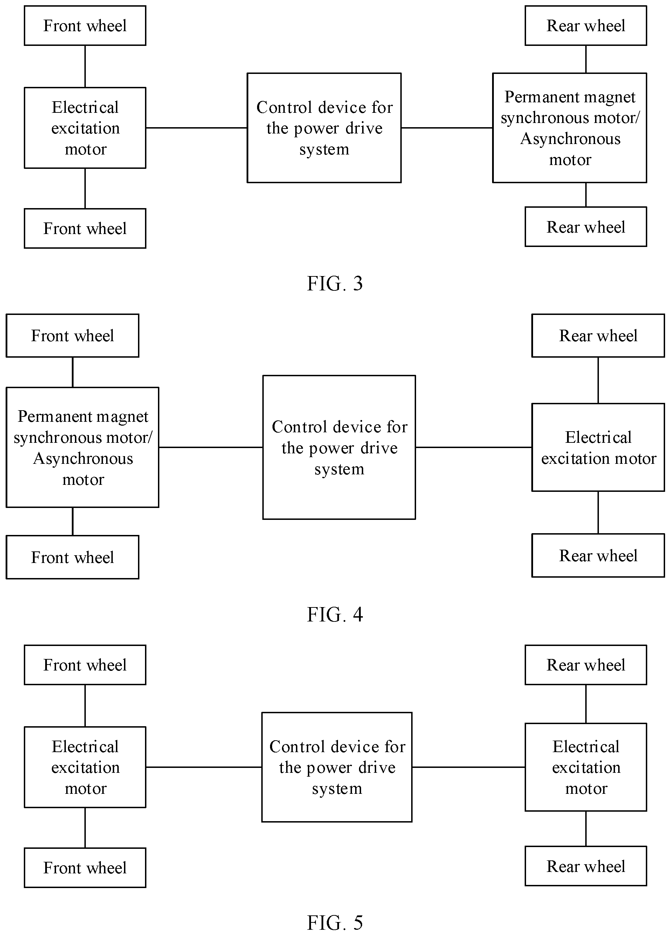

Optionally, FIG. 3 is a block diagram of a structure of another power drive system for a vehicle according to an embodiment of this application. The front-wheel-drive motor is an electrical excitation motor, and the rear-wheel-drive motor is a permanent magnet synchronous motor or an asynchronous motor. In this case, the front-wheel-drive motor is a secondary drive motor, and the rear-wheel-drive motor is a primary drive motor, that is, the electrical excitation motor may be in a non-operating state. Alternatively, FIG. 4 is a block diagram of a structure of another power drive system for a vehicle according to an embodiment of this application. The front-wheel-drive motor is a permanent magnet synchronous motor or an asynchronous motor, and the rear-wheel-drive motor is an electrical excitation motor. In this case, the front-wheel-drive motor is a primary drive motor, and the rear-wheel-drive motor is a secondary drive motor, that is, the electrical excitation motor may be in a non-operating state. Alternatively, FIG. 5 is a block diagram of a structure of another power drive system for a vehicle according to an embodiment of this application. Both the front-wheel-drive motor and the rear-wheel-drive motor are electrical excitation motors. In this case, either the front-wheel-drive motor or the rear-wheel-drive motor may serve as a primary drive motor, and the other serves as a secondary drive motor. In addition, when both the front-wheel-drive motor and the rear-wheel-drive motor are electrical excitation motors, flexible switching between a front-wheel-drive mode and a rear-wheel-drive mode can be achieved. For example, in the front-wheel-drive mode, the front-wheel-drive motor operates alone, the rear-wheel-drive motor does not operate, and a rotor of the rear-wheel-drive motor rotates along. In this case, if the vehicle is going uphill or accelerating or in other traveling state, the vehicle can switch to the rear-wheel-drive mode. In other words, the vehicle switches to a mode in which the rear-wheel-drive motor operates alone, the front-wheel-drive motor does not operate, and a rotor of the front-wheel-drive motor rotates along, so as to improve power performance of the vehicle in a specific state. The front-wheel-drive mode and the rear-wheel-drive mode are flexibly switched, no clutch is required, and loss is low without a risk of counter-electromotive force.

Optionally, the electrical excitation motor is any one of a wireless feed excitation motor, a brush excitation motor, and a hybrid excitation motor. For the wireless feed excitation motor, the motor is driven by wirelessly transmitting an exciting current. For the brush excitation motor, the motor is driven by transmitting an exciting current using a carbon brush or a slip ring or the like. For the hybrid excitation motor, the motor is driven by combining permanent magnet and excitation.

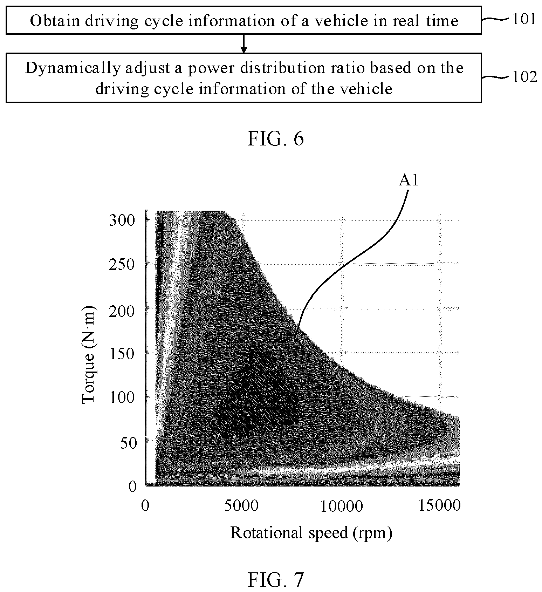

FIG. 6 is a schematic flowchart of a control method for a power drive system according to an embodiment of this application. An embodiment of this application further provides a control method for a power drive system, applied to the power drive system in the foregoing embodiment. The control method includes the following steps:
Step 101: Obtain driving cycle information of a vehicle in real time.
Step 102: Dynamically adjust a power distribution ratio based on the driving cycle information of the vehicle, where the power distribution ratio is a ratio of power output to a front-wheel-drive motor to power output to a rear-wheel-drive motor.

Specifically, the driving cycle information of the vehicle may reflect an operating state of the vehicle. For example, a temperature of a motor, a road condition in which the vehicle travels, torque of a motor, or the like may be determined from the driving cycle information. The electrical excitation motor is used, torque of which has a relatively large high-efficiency interval. The high-efficiency interval means that the motor has high operating efficiency within the torque interval. The torque of the electrical excitation motor is positively correlated with power input to the electrical excitation motor. Therefore, compared with a permanent magnet synchronous motor or an asynchronous motor, the torque of the electrical excitation motor can be adjusted in a larger interval while maintaining high operating efficiency, that is, power output to the electrical excitation motor can be adjusted in a larger interval. In addition, with the driving cycle information of the vehicle obtained in real time, the power distribution ratio between the front-wheel-drive motor and the rear-wheel-drive motor can be dynamically adjusted based on the operating state of the vehicle, so as to flexibly adjust the power distribution ratio based on a specific operating state of the vehicle while maintaining relatively high operating efficiency of the motor. For example, the rear-wheel-drive motor is an electrical excitation motor. When a ratio of power output to the front-wheel-drive motor to power output to the rear-wheel-drive motor is 1:0, it indicates that the vehicle switches to the front-wheel-drive mode, in which the front-wheel-drive motor operates alone, and the rear-wheel-drive motor does not operate. An excitation component corresponding to the rear-wheel-drive motor does not transmit energy, no magnetic field or only a small amount of magnetic flux exists in a rotor, and no counter-electromotive force or a small amount of counter-electromotive force is generated in a stator. Therefore, low loss is caused, reducing costs while improving efficiency. In other words, power and economy of the vehicle are balanced.

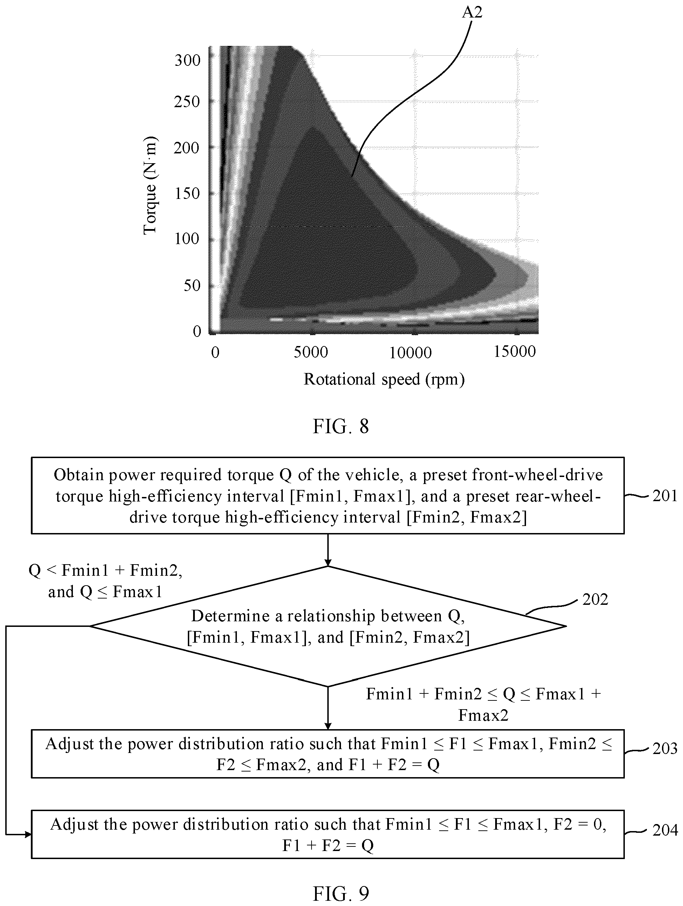

Optionally, FIG. 9 is a schematic flowchart of another control method for a power drive system according to an embodiment of this application. In the power drive system corresponding to the method shown in FIG. 9, a rear-wheel-drive motor is an electrical excitation motor, and a front-wheel-drive motor may be an electrical excitation motor, a permanent magnet motor, or the like. Step 101 of obtaining driving cycle information of a vehicle in real time includes step 201 of obtaining power required torque Q of the vehicle, a preset front-wheel-drive torque high-efficiency interval [Fmin1, Fmax1], and a preset rear-wheel-drive torque high-efficiency interval [Fmin2, Fmax2]. Step 102 of dynamically adjusting a power distribution ratio based on the driving cycle information of the vehicle includes step 202 of determining a relationship between Q, [Fmin1, Fmax1], and [Fmin2, Fmax2]. If Fmin1 + Fmin2 ≤ Q ≤ Fmax1 + Fmax2, the method proceeds to step 203, and if Q < Fmin1 + Fmin2, and Q ≤ Fmax1, the method proceeds to step 204. Fmin1 is a minimum value of the preset front-wheel-drive torque high-efficiency interval [Fmin1, Fmax1]; Fmin2 is a minimum value of the preset rear-wheel-drive torque high-efficiency interval [Fmin2, Fmax2]; Fmax1 is a maximum value of the preset front-wheel-drive torque high-efficiency interval [Fmin1, Fmax1]; and Fmax2 is a maximum value of the preset rear-wheel-drive torque high-efficiency interval [Fmin2, Fmax2].

Step 203: Adjust the power distribution ratio such that Fmin1 ≤ F1 ≤ Fmax1, Fmin2 ≤ F2 ≤ Fmax2, and F1 + F2 = Q, where F1 is torque of the front-wheel-drive motor, and F2 is torque of the rear-wheel-drive motor.

Step 204: Adjust the power distribution ratio such that Fmin1 ≤ F1 ≤ Fmax1, F2 = 0, and F1 + F2 = Q.

Specifically, the power distribution ratio actually refers to distribution of the current power required torque Q. The power required torque Q, for example, can be obtained through comprehensive calculation based on real-time driving cycle information of the vehicle such as a current throttle percentage. Regardless of how power is distributed, the power required torque Q of the vehicle needs to be satisfied. For example, it is assumed that the front-wheel-drive motor is a permanent magnet synchronous motor or an asynchronous motor, and the rear-wheel-drive motor is an electrical excitation motor. FIG. 7 is a schematic diagram of an efficiency interval of a front-wheel-drive motor according to an embodiment of this application, and FIG. 8 is a schematic diagram of an efficiency interval of a rear-wheel-drive motor according to an embodiment of this application. In FIG. 7 and FIG. 8, the abscissa represents a rotational speed of a motor, and the ordinate represents torque of the motor, where different grayscale intervals represent different efficiency intervals, and a darker grayscale indicates higher efficiency. An interval A1 in FIG. 7 represents the preset front-wheel-drive torque high-efficiency interval, and the front-wheel-drive motor has relatively high efficiency within this interval. An interval A2 in FIG. 8 represents the preset rear-wheel-drive torque high-efficiency interval, and the rear-wheel-drive motor has relatively high efficiency within this interval. For example, when the rotational speed of the front-wheel-drive motor is 5,000 rpm, the preset front-wheel-drive torque high-efficiency interval is [30 N·m, 260 N·m]. When the rotational speed of the rear-wheel-drive motor is 5,000 rpm, the preset rear-wheel-drive torque high-efficiency interval is [30 N·m, 220 N·m]. Assuming that actual Q obtained in step 201 is equal to 60 N·m, it is determined in step 202 that Fmin1 + Fmin2 ≤ Q ≤ Fmax1 + Fmax2, that is, Q = 60 N·m, and 60 N·m ≤ Q ≤ 480 N·m. In this case, the method proceeds to step 203 of adjusting the power distribution ratio, for example, adjusting the power distribution ratio such that F1 = 30 N·m, and F2=30 N·m. That is, both the front-wheel-drive motor and the rear-wheel-drive motor have high operating efficiency while satisfying the power required torque. In addition, assuming that the actual Q obtained in step 201 is equal to 40 N·m, it is determined in step 202 that Q < Fmin1 + Fmin2, that is, Q = 40 N·m < 60 N·m. In this case, the method proceeds to step 204 of adjusting the power distribution ratio, for example, adjusting the power distribution ratio such that F1 = 40 N·m and F2 = 0. That is, both the front-wheel-drive motor and the rear-wheel-drive motor have high operating efficiency while satisfying the power required torque. Moreover, the rear-wheel-drive motor is in a non-operating state, causing no loss. It should be additionally noted that, a specific method for obtaining the torque of the front-wheel-drive motor and the torque of the rear-wheel-drive motor may be obtaining a current and a voltage output to the corresponding motor, and estimating the torque of the corresponding motor based on the current and the voltage.

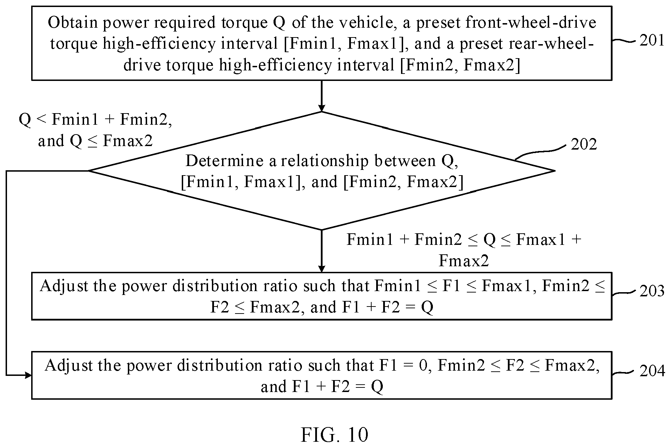

Optionally, FIG. 10 is a schematic flowchart of another control method for a power drive system according to an embodiment of this application. In the power drive system corresponding to the method shown in FIG. 10, a front-wheel-drive motor is an electrical excitation motor, and a rear-wheel-drive motor may be an electrical excitation motor, a permanent magnet motor, or the like. A difference between the method shown in FIG. 10 and the method shown in FIG. 9 lies in that in the method shown in FIG. 10, in the process of step 202 of determining a relationship between Q, [Fmin1, Fmax1], and [Fmin2, Fmax2], if Q < Fmin1 + Fmin2, and Q <_ Fmax2, the method proceeds to step 204 of adjusting the power distribution ratio such that F1 = 0, Fmin2 ≤ F2 ≤ Fmax2, and F1 + F2 = Q.

It should be additionally noted that in the embodiments corresponding to the methods shown in FIG. 9 and FIG. 10, the power distribution manners provided are not in all conditions satisfied by Q. In the embodiments of this application, a power distribution method in other conditions satisfied by Q is not limited, and may be adjusted as required. For example, the preset front-wheel-drive torque high-efficiency interval is [30 N·m, 50 N·m], and the preset rear-wheel-drive torque high-efficiency interval is [30 N·m, 50 N·m]. It is assumed that actual Q obtained in step 201 is equal to 55 N·m. In this case, the power distribution ratio is adjusted such that one of the front-wheel-drive motor and the rear-wheel-drive motor satisfies the preset torque high-efficiency interval, and the remaining torque is distributed to the other motor. For example, the distribution is that F1 = 30 N·m, and F2 = 25 N·m. In this way, the front-wheel-drive motor may have relatively high efficiency, and the torque of the rear-wheel-drive motor is as close as possible to the preset the rear-wheel-drive high-efficiency interval. In addition, if the rear-wheel-drive motor is an electrical excitation motor, assuming that the actual Q obtained in step 201 is equal to 55 N·m, the power distribution ratio may also be adjusted such that F1 = 55 N·m, and F2 = 0. That is, the rear-wheel-drive motor is controlled to be in a non-operating state, and all power is distributed to the front-wheel-drive motor. It is assumed that the actual Q obtained in step 201 is equal to 120 N·m. In this case, regardless of how the power distribution ratio is adjusted, the two motors cannot both operate within the high-efficiency intervals. In this case, the power distribution ratio may be adjusted according to another principle. For example, the power may be evenly distributed such that F1 = 60 N·m, and F2 = 60 N·m. In this way, although neither of the motors can operate within the high-efficiency intervals, the torque is close to the high-efficiency intervals, and it is not easy to cause overheating of one motor. In addition, the power distribution ratio may alternatively be adjusted such that torque of one motor is within the high-efficiency interval, and the remaining torque is distributed to the other motor. For example, F1 = 50 N·m, and F2 = 70 N·m. In this way, the front-wheel-drive motor can operate within the high-efficiency interval, and the torque of the rear-wheel-drive motor can be as close as possible to the high-efficiency interval.

Optionally, step 101 of obtaining driving cycle information of a vehicle in real time includes: obtaining a temperature of the front-wheel-drive motor and a temperature of the rear-wheel-drive motor; and step 102 of dynamically adjusting a power distribution ratio based on the driving cycle information of the vehicle includes: when the temperature of the front-wheel-drive motor reaches a first threshold or higher, decreasing the power output to the front-wheel-drive motor, and increasing the power output to the rear-wheel-drive motor; and when the temperature of the rear-wheel-drive motor reaches a second threshold or higher, increasing the power output to the front-wheel-drive motor, and decreasing the power output to the rear-wheel-drive motor.

Specifically, overheating of a motor may lead to a fault or a safety hazard. Therefore, during a traveling process of the vehicle, the temperature of the front-wheel-drive motor may be monitored in real time by using a temperature sensor mounted at the front-wheel-drive motor, and the temperature of the rear-wheel-drive motor may be monitored in real time by using a temperature sensor mounted at the rear-wheel-drive motor. For example, if it is detected that the temperature of the front-wheel-drive motor reaches the first threshold or higher, it indicates that the temperature of the front-wheel-drive motor is extremely high. In this case, the power output to the front-wheel-drive motor is to be decreased, and the power output to the rear-wheel-drive motor is to be increased. In this way, the front-wheel-drive motor can be cooled without changing total power output, so as to ensure safety. If the front-wheel-drive motor is an electrical excitation motor, the power can be decreased to 0 as required, such that the front-wheel-drive motor is in a non-operating state, so as to achieve the best cooling effect. Similarly, if it is detected that the temperature of the rear-wheel-drive motor reaches the second threshold or higher, it indicates that the temperature of the rear-wheel-drive motor is extremely high. In this case, the power output to the rear-wheel-drive motor is to be decreased, and the power output to the front-wheel-drive motor is to be increased. In this way, the rear-wheel-drive motor can be cooled without changing total power output, so as to ensure safety. If the rear-wheel-drive motor is an electrical excitation motor, the power can be decreased to 0 as required, such that the rear-wheel-drive motor is in a non-operating state, so as to achieve the best cooling effect. It should be noted that, adjusting the power distribution ratio based on the temperature of the motor may have a higher priority than adjusting the power distribution ratio based on the torque of the motor, so as to preferentially ensure safety and further ensure operating efficiency. For example, in an efficiency-based distribution mode, the vehicle dynamically adjusts the power distribution ratio based on efficiency intervals shown in FIG. 7 and FIG. 8. When it is detected that the temperature of the front-wheel-drive motor or the rear-wheel-drive motor rises to the corresponding threshold, the vehicle enters a temperature-based distribution mode. In this case, the power is no longer distributed based on the efficiency intervals shown in FIG. 7 and FIG. 8, but is distributed based on the temperature of the motor to achieve cooling of an overheated motor. When it is detected that the temperature of the motor decreases to an acceptable range, the vehicle restores the efficiency-based distribution mode and re-distributes the power based on the efficiency intervals shown in FIG. 7 and FIG. 8.

Optionally, step 101 of obtaining driving cycle information of a vehicle in real time includes: obtaining a traveling state of the vehicle; and step 102 of dynamically adjusting a power distribution ratio based on the driving cycle information of the vehicle includes: when the traveling state of the vehicle is going uphill, decreasing the power output to the front-wheel-drive motor, and increasing the power output to the rear-wheel-drive motor; and when the traveling state of the vehicle is turning beyond a preset angle, increasing the power output to the front-wheel-drive motor, and decreasing the power output to the rear-wheel-drive motor.

Specifically, the traveling state of the vehicle may be determined based on a sensor on the vehicle. For example, a current traveling state of the vehicle may be determined based on information detected by an electronic stability program (Electronic Stability Program, ESP) and a gyroscope on the vehicle. For example, when the vehicle is going uphill, the rear-wheel-drive mode provides higher stability and safety, while the front-wheel-drive mode is more conducive to large-angle turning. Therefore, when a different traveling state of the vehicle is detected, the power distribution ratio can be adjusted as required. When the vehicle is going uphill, if the front-wheel-drive motor is an electrical excitation motor, the power of the front-wheel-drive motor can be decreased to 0 as required, such that the front-wheel-drive motor is in a non-operating state, and the rear-wheel-drive motor operates alone, that is, the vehicle enters the rear-wheel-drive mode. After power adjustment, stability and safety of the vehicle going uphill are improved, and no additional power output is required. When the vehicle is turning at a large angle, if the rear-wheel-drive motor is an electrical excitation motor, the power of the rear-wheel-drive motor can be decreased to 0 as required, so as to improve the performance of large-angle turning.

It should be noted that adjusting the power distribution ratio based on the traveling state of the vehicle may have a higher priority than adjusting the power distribution ratio based on the torque of the motor, so as to preferentially ensure stability and safety in a specific road condition. For example, in the efficiency-based distribution mode, the vehicle dynamically adjusts the power distribution ratio based on the efficiency intervals shown in FIG. 7 and FIG. 8. When it is detected that the traveling state of the vehicle is going uphill or turning beyond a preset angle, the vehicle enters a distribution mode based on a specific road condition. In this case, the power is no longer distributed based on the efficiency intervals shown in FIG. 7 and FIG. 8, but is distributed based on the traveling state. When it is detected that the vehicle travels in a regular road condition again, the vehicle restores the efficiency-based distribution mode and re-distributes power based on the efficiency intervals shown in FIG. 7 and FIG. 8.

An embodiment of this application further provides a control device for a power drive system, including: a processor and a memory, where the memory is configured to store at least one instruction, and when the instruction is loaded and executed by the processor, the control method for a power drive system is implemented.

There may be one or more processors, and the processor and the memory may be connected via a bus or in another manner. As a non-transitory computer-readable storage medium, the memory may be configured to store non-transitory software programs, non-transitory computer-executable programs, and modules. The processor executes various functional applications and data processing, that is, implements the method in any one of the foregoing method embodiments, by running the non-transitory software programs, instructions, and modules stored in the memory. The memory may include a program storage area and a data storage area, where the program storage area may store an operating system, an application program required by at least one function, necessary data, and the like. In addition, the memory may include a high-speed random access memory, and may further include a non-transitory memory such as at least one magnetic disk storage device, a flash memory device, or another non-transitory solid-state storage device.

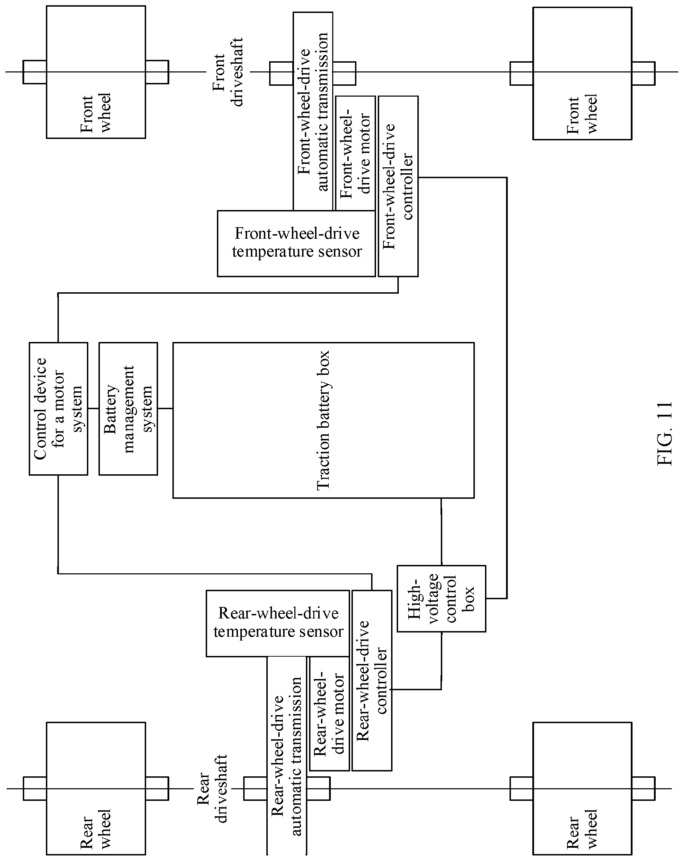

FIG. 11 is a block diagram of a structure of another power drive system for a vehicle according to an embodiment of this application. An embodiment of this application provides a vehicle, including the power drive system in the foregoing embodiment and the control device for a power drive system in the foregoing embodiment.

In addition, the vehicle may further include: a traction battery box, configured to supply electric energy to high-voltage and low-voltage electrical components of the vehicle; a battery management system, configured to provide a traction battery dynamic parameter; a front-wheel-drive temperature sensor, configured to monitor a temperature of a front-wheel-drive motor; a front-wheel-drive controller, configured to drive the front-wheel-drive motor; a rear-wheel-drive temperature sensor, configured to monitor a temperature of a rear-wheel-drive motor; a rear-wheel-drive controller, configured to drive the rear-wheel-drive motor; a front-wheel-drive automatic transmission, which changes a transmission ratio between the front-wheel-drive motor and a front driveshaft based on a traveling speed of the vehicle and a rotational speed of the front-wheel-drive motor, where the automatic transmission has a differential inside; the front driveshaft, configured to transmit power output by the front-wheel-drive motor to front wheels; a rear-wheel-drive automatic transmission, which changes a transmission ratio between the rear-wheel-drive motor and a rear driveshaft based on a traveling speed of the vehicle and a rotational speed of the rear-wheel-drive motor, where the automatic transmission has a differential inside; the rear driveshaft, configured to transmit power output by the rear-wheel-drive motor to rear wheels; the front wheels and the rear wheels; and a high-voltage control box, configured to distribute electric energy to high-voltage parts of the vehicle. The front-wheel-drive motor in the power drive system is configured to drive the front wheels through the front-wheel-drive automatic transmission and the front driveshaft. The rear-wheel-drive motor in the power drive system is configured to drive the rear wheels through the rear-wheel-drive automatic transmission and rear driveshaft. The control device for a power drive system is configured to control the power drive system including the front-wheel-drive motor and the rear-wheel-drive motor by using the control method for a power drive system in the foregoing embodiment.

The vehicle in the embodiments of this application may be a battery electric vehicle (Battery Electric vehicle, BEV), a hybrid electric vehicle (Plug-in hybrid electric vehicle, PHEV), or a fuel cell electric vehicle (Fuel Cell Electric Vehicle, FCEV). This is not limited in the embodiments of this application.

An embodiment of this application further provides a computer-readable storage medium. The computer-readable storage medium stores a computer program, and when the computer program runs on a computer, the computer is enabled to perform the control method for a power drive system in the foregoing embodiment.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A power drive system, applied to an electric vehicle, wherein the system comprises:
a front-wheel-drive motor and a rear-wheel-drive motor, at least one of which is an electrical excitation motor, wherein the front-wheel-drive motor is configured to provide power for front wheels to drive the vehicle, and the rear-wheel-drive motor is configured to provide power for rear wheels to drive the vehicle.

2. The system according to claim 1, wherein
the front-wheel-drive motor is an electrical excitation motor, and the rear-wheel-drive motor is a permanent magnet synchronous motor or an asynchronous motor; or
the front-wheel-drive motor is a permanent magnet synchronous motor or an asynchronous motor, and the rear-wheel-drive motor is an electrical excitation motor; or
both the front-wheel-drive motor and the rear-wheel-drive motor are electrical excitation motors.

3. The system according to claim 1 or 2, wherein the electrical excitation motor is any one of a wireless feed excitation motor, a brush excitation motor, and a hybrid excitation motor.

4. A control method for a power drive system, applied to the power drive system according to any one of claims 1 to 3, wherein the control method comprises:
obtaining driving cycle information of a vehicle in real time; and
dynamically adjusting a power distribution ratio based on the driving cycle information of the vehicle, wherein the power distribution ratio is a ratio of power output to a front-wheel-drive motor to power output to a rear-wheel-drive motor.

5. The method according to claim 4, wherein
the obtaining driving cycle information of a vehicle in real time comprises: obtaining power required torque Q of the vehicle, a preset front-wheel-drive torque high-efficiency interval [Fmin1, Fmax1], and a preset rear-wheel-drive torque high-efficiency interval [Fmin2, Fmax2]; and
the dynamically adjusting a power distribution ratio based on the driving cycle information of the vehicle comprises: adjusting the power distribution ratio based on Q, [Fmin1, Fmax1], and [Fmin2, Fmax2], wherein
if Fmin1 + Fmin2 ≤ Q ≤ Fmax1 + Fmax2, the power distribution ratio is adjusted such that Fmin1 ≤ F1 ≤ Fmax1, Fmin2 ≤ F2 ≤ Fmax2, and F1 + F2 = Q, wherein F1 is torque of the front-wheel-drive motor, and F2 is torque of the rear-wheel-drive motor.

6. The method according to claim 5, wherein
in the power drive system, the rear-wheel-drive motor is an electrical excitation motor, and the process of adjusting the power distribution ratio based on Q, [Fmin1, Fmax1], and [Fmin2, Fmax2] further comprises:
if Q < Fmin1 + Fmin2, and Q ≤ Fmax1, adjusting the power distribution ratio such that Fmin1 ≤ F1 ≤ Fmax1, F2 = 0, and F1 + F2 = Q.

7. The method according to claim 5, wherein
in the power drive system, the front-wheel-drive motor is an electrical excitation motor, and the process of adjusting the power distribution ratio based on Q, [Fmin1, Fmax1], and [Fmin2, Fmax2] further comprises:
if Q < Fmin1 + Fmin2, and Q < Fmax2, adjusting the power distribution ratio such that F1 = 0, Fmin2 ≤ F2 ≤ Fmax2, and F1 + F2 = Q.

8. The method according to claim 4, wherein
the obtaining driving cycle information of a vehicle in real time comprises: obtaining a temperature of the front-wheel-drive motor and a temperature of the rear-wheel-drive motor; and
the dynamically adjusting a power distribution ratio based on the driving cycle information of the vehicle comprises:
when the temperature of the front-wheel-drive motor reaches a first threshold or higher, decreasing the power output to the front-wheel-drive motor, and increasing the power output to the rear-wheel-drive motor; and
when the temperature of the rear-wheel-drive motor reaches a second threshold or higher, increasing the power output to the front-wheel-drive motor, and decreasing the power output to the rear-wheel-drive motor.

9. The method according to claim 4, wherein
the obtaining driving cycle information of a vehicle in real time comprises: obtaining a traveling state of the vehicle; and
the dynamically adjusting a power distribution ratio based on the driving cycle information of the vehicle comprises:
when the traveling state of the vehicle is going uphill, decreasing the power output to the front-wheel-drive motor, and increasing the power output to the rear-wheel-drive motor; and
when the traveling state of the vehicle is turning beyond a preset angle, increasing the power output to the front-wheel-drive motor, and decreasing the power output to the rear-wheel-drive motor.

10. A control device for a power drive system, comprising:
a processor and a memory, wherein the memory is configured to store at least one instruction, and when the instruction is loaded and executed by the processor, the method according to any one of claims 4 to 9 is implemented.

11. A vehicle, comprising the power drive system according to any one of claims 1 to 3, and the control device for a power drive system according to claim 10.

12. A computer-readable storage medium, wherein the computer-readable storage medium stores a computer program; and when the computer program runs on a computer, the computer is enabled to perform the method according to any one of claims 4 to 9.
